Europäisches Patentamt

European Patent Office

Office européen des brevets

(11) Veröffentlichungsnummer: **0 229 311**
A2

## (12) EUROPÄISCHE PATENTANMELDUNG

(21) Anmeldenummer: 86117094.2

(22) Anmeldetag: 09.12.86

(51) Int. Cl.³: **B 65 G 69/28**

(30) Priorität: 17.12.85 DE 3544545

(43) Veröffentlichungstag der Anmeldung:
22.07.87 Patentblatt 87/30

(84) Benannte Vertragsstaaten:
AT BE CH DE ES FR GB GR IT LI LU NL SE

(71) Anmelder: Alten, Kurt
Ringstrasse 14
D-3015 Wennigsen(DE)

(72) Erfinder: Alten, Kurt
Ringstrasse 14
D-3015 Wennigsen(DE)

(74) Vertreter: Depmeyer, Lothar
Auf der Höchte 30
D-3008 Garbsen 1(DE)

(54) **Überfahrbrücke für Rampen.**

(57) Die Erfindung geht aus von einer Überfahrbrücke für Rampen mit einer schwenkbaren Brückenplatte und einer daran hinund herbewegbaren Verlängerung zur Auflage auf der zu be- bzw. entladenden Plattform, wobei der Brücke ein eine automatische Rückkehr in die Ruhelage der Brücke bewirkender bzw.zulassender Schalter zugeordnet ist. Um sicherzustellen, dass eine Rückkehr in die Ruhelage mit Sicherheit nur dann stattfinden kann, wenn sich keine Plattform im Brückenbereich befindet, ist aufgrund der Erfindung unterhalb der Spitze der Verlängerung ein Richtung auf die Brückenplatte bewegbarer, durch die Plattform beeinflussbarer Fühler vorgesehen, der im beaufschlagten Zustand den Schalter nicht und im nicht beaufschlagten Zustand betätigt.

Fig. 1

EP 0 229 311 A2

Croydon Printing Company Ltd.

86117094.2

0229311

## Überfahrbrücke für Rampen

Die Erfindung betrifft eine Überfahrbrücke nach dem Gattungsbegriff des 1. Patentanspruches.

Bei diesen Überfahrbrücken ergeben sich Schwierigkeiten, wenn das zu beladende Fahrzeug sich noch im Rampenbereich befindet, jedoch aus irgendwelchen Gründen nicht mehr mit der Verlängerung der Brückenplatte in Verbindung steht bzw. diese Berührung verloren hat. Dies kann zum Beispiel dann eintreten, wenn die Brückenplatte bereits ihre untere Endstellung eingenommen hat und dort an einem Widerlager anliegt, zugleich aber die Plattform des Fahrzeuges z.B. durch Befahren mit einem Flurfördergerät noch weiter absinkt. Unter diesen Voraussetzungen ergibt sich ein Spalt zwischen der Verlängerung und der Plattform. Dadurch können Unfälle entstehen, zumal die Brücke sich dann in die Null-Lage zurückbewegen kann.

Der Erfindung liegt die Aufgabe zugrunde, die eingangs erwähnten Überfahrbrücken so zu verbessern, dass eine ungewollte Rückführung in die sog. Null-Lage auch dann nicht eintreten kann, wenn sich zwischen der Verlängerung und der Plattform ein Spalt ergibt.

Zur Lösung dieser Aufgabe ist erfindungsgemäss nahe unterhalb der Spitze der in der Wirkstellung befindlichen Verlängerung ein in Richtung auf die Brückenplatte bewegbarer, durch die Plattform beeinflussbarer Fühler zur Betätigung des Schalters vorgesehen, wobei der Schalter bei nicht beaufschlagtem Fühler betätigt und bei beaufschlagtem Fühler der Schalter unwirksam ist. Die bewegliche Lagerung des Fühlers kann dabei durch einen in Richtung der Brückenlängsrichtung verschiebbaren Stössel oder aber auch durch einen um eine senkrechte Achse verschwenkbaren Hebel erfolgen. Am vorderen Ende des Stössels bzw. am freien Ende des Hebels befindet sich dabei der Fühler in der Weise, dass er mit Sicherheit vom Fahrzeug bzw. der Plattform erfasst werden kann, wobei ggfs. auch der Fühler beim Ausfahren der Verlängerung mit der Plattform in Berührung kommen kann. Der Stössel bzw. der Hebel wirken dabei unmittelbar, ggfs. aber auch mittelbar auf den Schalter ein, der seinerseits in beliebiger Weise z.B. als elektrischer Schalter oder als hydraulischer Schalter ausgeführt sein kann. Es versteht sich, dass der Stössel bzw. der Hebel so unter der Wirkung einer Rückstellkraft stehen muss, dass bei nicht beaufschlagtem Fühler der Schalter betätigt ist, um so eine Rückkehr in die sog. Null-Lage der Brückenplatte zu ermöglichen.

Wird der Fühler jedoch beaufschlagt und damit der Schalter entlastet, so kann eine Rückkehr in die Null-Lage nicht stattfinden. Damit ist sichergestellt, dass immer dann eine Rückkehr in die Null-Lage ausgeschlossen ist, wenn sich die Plattform noch im Wirkungsbereich der Verlängerung befindet.

Vorzugsweise wird der Fühler eine bestimmte Abmessung erhalten, und zwar eine besondere Höhenerstreckung z.B. so geformt sein, dass sein oberes Ende sehr nahe unterhalb der Verlängerung angeordnet ist, während sich der Fühler über ein beträchtliches Mass z.B. etwa 2o - 3o cm nach unten erstreckt. Diese Erstreckung hat den grossen Vorteil, dass der Fühler auch dann noch den Schalter beeinflussen kann bzw. verschiebbar ist unter Freigabe des Schalters, wenn sich die Brückenplatte bereits in ihrer unteren Endstellung befindet bzw. dort auf einem festen Widerlager aufliegt.

Die Erfindung wird vorzugsweise bei solchen Überfahrbrücken benutzt, die aus jeder Lage ihrer Brückenplatte heraus in die sog. Null-Lage geführt werden kann, sei es durch automatisch wirkende Mittel oder aber auch durch Handsteuerung. Insb. soll jedoch die erfindungsgemässe Brücke bei solchen Ausführungen Anwendung finden, bei denen eine automatische Rückkehr in die sog. Null-Lage dann eintritt, wenn das die Plattform aufweisende Fahrzeug die Rampe bzw. den Brückenbereich verlässt.

Weitere Einzelheiten der Erfindung werden anhand der Zeichnung erläutert, in der Ausführungsbeispiele der Erfindung dargestellt sind. Es zeigen :

Fig. 1 einen senkrechten Längsschnitt durch eine Überfahrbrücke für Rampen,

Fig. 2 die Brücke gemäss Fig. 1 in der Unteransicht ( Teilansicht ).

Fig. 3 eine abgewandelte Überfahrbrücke im senkrechten Längsschnitt und

Fig. 4 die Brücke gemäss Fig. 3 in der Ansicht von unten ( Teilansicht).

Am rampenseitigen Ende ist die Brückenplatte 1 um eine Querachse 2 an der Rampe 3 mit einer Ausnehmung 4, Rampenkante 5 und Rampenoberfläche 6 schwenkbar angeordnet.

Am vorderen Ende der Brückenplatte 1 befindet sich eine mittels Schlitten 7 hin und her in Brückenlängsrichtung bewegbare Verlängerung 8, die durch einen Zylinder 9 bewegbar ist und zur Abstützung der Brückenplatte 1 auf der zu be- bzw. entladenden Plattform 1o eines Fahrzeuges dient, wenn sich die Brücke in Betrieb befindet und so eine sich verändernde Höhe der Plattform 1o eine Folgebewegung der Brückenplatte 1 nach sich zieht, was durch unterschiedliche Beladungszustände und Flurfahrzeuge geschehen kann, die sich auf dem Fahrzeug befinden. Aus Gründen einer vorteilhaften ständigen Berührung der Plattform 1o durch die Verlängerung 8 ist die Brückenplatte 1 geringfügig kopflastig eingestellt.

Zum Anheben der Brückenplatte 1 dient ein hydraulischer Hubzylinder 11, dessen Zuleitungen und Druckerzeuger - ebenso beim Zylinder 9 - nicht dargestellt sind.

Zudem ist die Überfahrbrücke auch mit einer besonderen, an sich bekannten Steuerung ausgerüstet, ferner mit einem Schaltpult. Diese Einrichtungen sind in üblicher Weise gestaltet und nicht dargestellt.

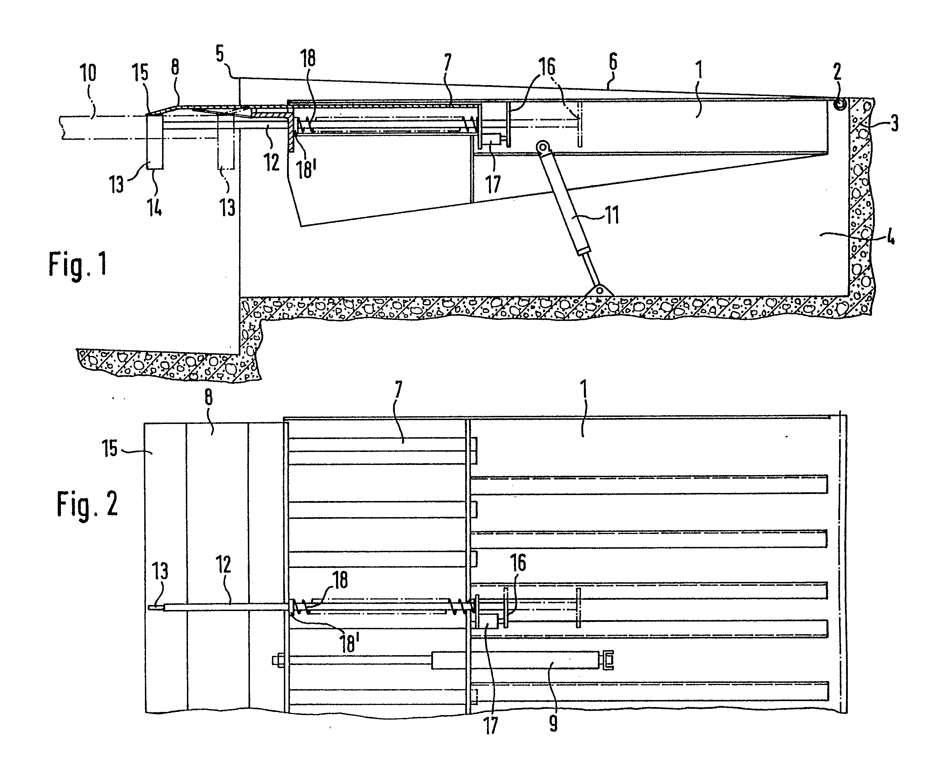

Bei der Brücke gemäss Fig. 1 und 2 ist am Schlitten 7, der sich gemäss Zeichnung im ausgefahrenen Zustand befindet, längsverschiebbar eine Stange 12 gelagert, die am freien Ende mit einem Fühler 13 in Form eines senkrecht angeordneten Bleches 14 versehen ist. dass sich im nicht beaufschlagten Zustand unterhalb der Spitze 15 der Verlängerung 8 befindet, mit seinem oberen Rand mit geringem Spiel unterhalb der Verlängerung 8 befindet und etwa um 25 cm nach unten ragt. Am hinteren Ende der Stange 12 hinter dem Schlitten 7 ist die Stange 12 mit einer Abschlussplatte 16 in senkrechter Anordnung versehen, die im nicht beaufschlagten Zustand des Fühlers 13 einen am hinteren Ende des Schlittens 7 befindlichen Schalter 17 betätigt. In dieser vorderen Stellung wird die Stange 12 durch eine Druckfeder 18 gehalten, die sich hinten am Schlitten 7 und vorne an einem Vorsprung 18' an der Stange 12 abstützt in der Weise, dass die Druckfeder stets danach trachtet, den Fühler 13 unterhalb der Spitze 15 zu halten und dabei mit der Abschlussplatte 16 den Schalter 17 betätigt bzw. in einer Wirkstellung hält.

Wird nun bei ausgefahrenem Schlitten 7 und der dabei herausragenden Verlängerung 8 durch Zurücksetzen der Plattform 1o bzw. des zugehörigen Fahrzeuges der Fühler 13 beaufschlagt, so wird dieser zurückgedrängt, wobei sich die Stange 12 nach hinten bewegt und die Abschlussplatte 16 vom Schalter 17 freikommt. Damit wird die Wirkstellung des Schalters 17, dessen Bedeutung nachstehend noch erläutert wird, aufgehoben. Eine solche Stellung ist in Fig. 1 gestrichelt wiedergegeben.

Der Überfahrbrücke ist noch eine Steuerung zugeordnet, die dafür Sorge trägt, dass die Brücke wieder in ihre Normallage ( Null-Lage ) zurückkehrt, wenn die Plattform 1o bzw, das Fahrzeug die Rampe verlassen hat. Unter diesen Voraussetzungen muss aus Sicherheitsgründen die Oberfläche der Brückenplatte 1 wieder mit der Rampenoberfläche 6 abschliessen. Eine feste Unterstützung der Brückenplatte 1 ist dabei erforderlich, damit der Rampenverkehr durchgeführt werden kann. Auch die Verlängerung 8 mit der Stange 12 und dem Fühler 13 sind dann eingezogen.

Der Schalter 17 als elektrischer Schalter oder als hydraulisches Organ ist so mit der erwähnten Steuerung in Wirkverbindung, dass eine automatische Rückkehr in die Null-Lage nur dann eintreten kann, wenn der Schalter 17 durch die Abschlussplatte 16 betätigt ist. Dies ist aber immer nur dann der Fall, wenn sich keine Plattform 1o im Bereich der Verlängerung befindet. Würde nämlich die Brücke ungewollt in die erwähnte Null-Lage zurückkehren, wenn sich die Plattform noch im Bereich der Verlängerung 8 befindet, so kann es zu Unfällen kommen. Diese Gefahr ergibt sich bei bekannten Brücken z.B. dann, wenn die Brückenplatte 1 ihre unterste Endstellung erreicht hat und die Plattform 1o aus irgendwelchen Gründen noch tiefer absinken würde, der Kontakt zur Verlängerung also verloren geht. Hierbei käme es zu einer Spaltbildung zwischen der Plattform 1o und der Verlängerung 8 und dabei auch zu gefährlichen Betriebszuständen. Selbst unter diesen Begleitumständen wird eine automatische Rückkehr in die Null -Lage verhindert, weil sich der Fühler 13 noch um ein ausreichend grosses Mass nach unten erstreckt und der Kontakt zwischen Fühler 13 und Plattform 1o nach wie vor sichergestellt ist.

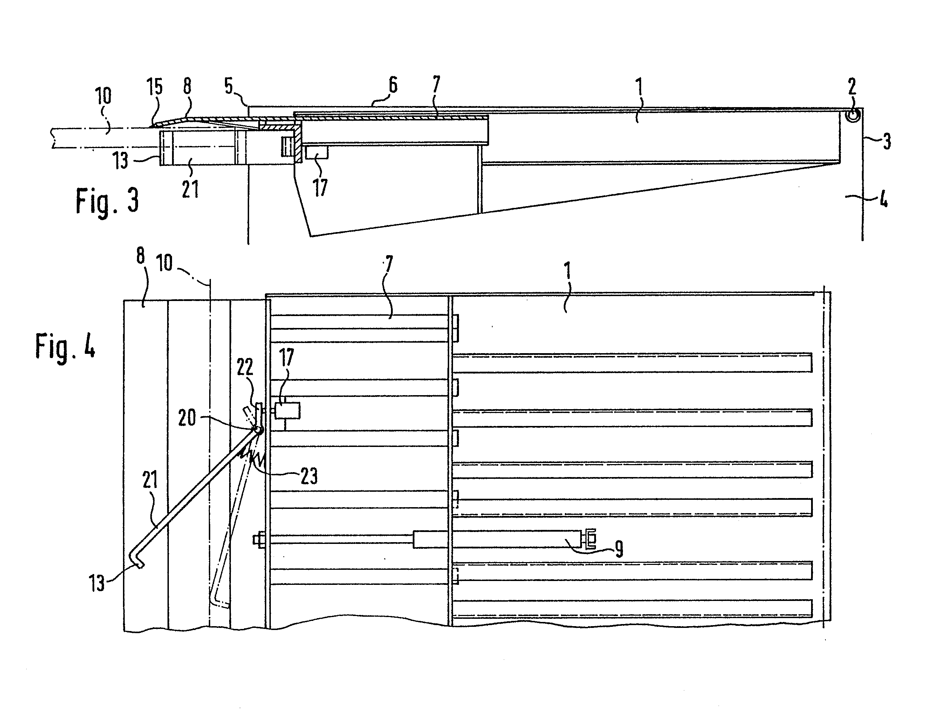

Bei der Ausführungs gemäss Fig. 3 und 4 ist die Stange 12 durch einen am hinteren Ende der Verlängerung 8 um eine senkrechte Achse 2o verschwenkbaren Doppelhebel, dessen längerer Arm 21 unterhalb der Spitze 15 den Fühler 13 trägt, ersetzt. Der kürzere Arm 22 hingegen ist in der Lage, den Schalter 17 zu betätigen, was immer dann der Fall ist, wenn sich der Arm 21 in der Stellung gemäss Fig. 4 befindet, also keine Plattform 1o eine Verschwenkung des Doppelhebels bewirkt hat. Dem Doppelhebel ist zudem eine Druckfeder 23 zugeordnet, die den Hebel 21 in seiner Ruhestellung zu halten versucht. Auch bei dieser Anordnung erfolgt eine Beaufschlagung des Schalters 17 nur dann, wenn sich kein Fahrzeug im Bereich der Verlängerung 8 befindet. Dann kann ungehindert die automatische Rückkehr in die erwähnte Null-Lage erfolgen; diese Massnahme wird also durch den Schalter 17 nicht unterbunden, was jedoch wiederum der Fall ist, wenn der Fühler 13 berührt und der Hebel 21 verschwenkt ist. Auch gemäss Fig. 3 und 4 ist der Fühler 13 so gestaltet, dass er auch dann noch erfasst werden kann, wenn zwischen Verlängerung 8 und der Plattform 1o aus den erwähnten Gründen ein erheblicher Spalt vorhanden ist und bei bekannten Überfahrbrücken eine automatische Rückkehr der Brücke in die Null-Lage eintritt.

Es versteht sich, dass die Rückkehr in die erwähnte Null-Lage durch eine Steuerung der beiden Zylinder 9, 11 erfolgt. Diese Steuerung kann auch durch Knopfdruck vom Schaltpult her ausgelöst werden; sie kann aber auch durch Endschalter oder andere Mittel herbeigeführt werden.

Ferner ist es möglich, die Rückführung in die erwähnte Null-Lage überhaupt erst durch den Fühler 13 anzuregen bzw. einzuleiten. Demgemäss kann die Steuerung der Brücke so erfolgen, dass eine automatische Rückkehr erfolgt, wenn die Plattform 1o abgezogen und dann der Fühler 13 unter die Spitze 15 gelangt ist bzw. seine Rugelage eingenommen hat. Weiterhin kann anstelle einer Druckfeder 18 eine Zugfeder benutzt werden, die z.B. am freien Ende der Stange 12 befestigt wird, während das andere Federende an der Verlängerung 8 zu lagern ist. Es sind weiterhin zwei Federn möglich, und zwar je eine Feder an einer Seite der Stange 12.

Ansprüche

1. Überfahrbrücke für Rampen mit einer an ihrem rampenseitigen Ende um eine waagerechte Achse verschwenkbar gelagerten Brückenplatte und einer am freine Ende der Brückenplatte befindlichen, ein- und ausfahrbaren Verlängerung zur Auflage und Abstützung auf der zu be- bzw. entladenden Plattform, wobei der Brücke ein eine automatische Rückkehr in die Ruhelage der Brücke bewirkender bzw. diese Rückkehr zulassender Schalter zugeordnet ist, dadurch gekennzeichnet, dass unterhalb der Spitze (15) der Verlängerung (8) ein in Richtung auf die Brückenplatte (1) bewegbarer, durch die Plattform beeinflussbarer Fühler (13) vorgesehen ist, der im beaufschlagten Zustand den Schalter (17) nicht und im nicht beaufschlagten Zustand betätigt.

2. Brücke nach Anspruch 1, dadurch gekennzeichnet, dass der Fühler (13), der Schalter (17) und die Übertragungselemente zwischen Fühler und Schalter an der Verlängerung (8) bzw. dem sie tragenden Schlitten (7) gelagert sind.

3. Brücke nach Anspruch 1, dadurch gekennzeichnet, dass der Fühler (13) mit seinem oberen Ende nahe unterhalb der Verlängerung (8) angeordnet ist und sich von dort aus etwa 2o - 3o cm nach unten erstreckt bzw. eine wirksame Höhe dieses Ausmasses hat.

4. Brücke nach Anspruch 1, dadurch gekennzeichnet, dass der Fühler (13) am vorderen Ende einer sich gegen eine Rückstellkraft nach hinten bewegbaren Stange (12) befindet, die vorzugsweise am hinteren Ende einen Vorsprung (16) zur Beeinflussung des Schalters (17) hat.

5. Brücke nach Anspruch 1, dadurch gekennzeichnet, dass der Fühler (13) an einem um eine senkrechte Achse (2o) verschwenkbaren Hebel (21) gelagert ist, der gegen eine Rückstellkraft verschwenkbar ist und etwa an der Wurzel der Verlängerung (8) auf den Schalter (17) einwirkt.

6. Brücke nach Anspruch 4, dadurch gekennzeichnet, dass der Schalter (17) durch einen am hinteren Ende der Stange (12) befindlichen Vorsprung in Form einer quer abstehenden Platte (16) beeinflussbar ist.

7. Brücke nach Anspruch 5, dadurch gekennzeichnet, dass der Hebel (21) der vordere Teil eines Doppelhebels ist, dessen anderer Hebel (22) den Schalter (17) betätigt.

8. Brücke nach Anspruch 5, dadurch gekennzeichnet, dass der Hebel (21) etwa am hinteren Ende der Verlängerung (8) gelagert ist.

9. Brücke nach Anspruch 1, dadurch gekennzeichnet, dass der Fühler (13) mit seinem oberen Ende nahe unterhalb der Verlängerung (8) angeordnet ist und sich von dort aus etwa um eine Mass nach unten erstreckt, das etwa das o.3 - o.5-fache der Länge der Verlängerung (8) entspricht.

Fig. 1

Fig. 2

0229311

Fig. 3

Fig. 4